# EUROPEAN PATENT APPLICATION

(11) **EP 4 393 646 A1**
(43) Date of publication of application: **03.07.2024**
(21) Application number: 23000147.1
(22) Date of filing: 31.10.2023
(51) Int. Cl.: B24B 41/06

(54) **A MULTI-EDGE TOOL CLAMPING KIT FOR POST-WELD SURFACE FINISHING, USE OF THE MULTI-EDGE TOOL CLAMPING KIT FOR POST-WELD SURFACE FINISHING AND A METHOD OF MANUFACTURINGTHE MULTI-EDGE TOOL CLAMPING KIT FOR POST-WELD SURFACE FINISHING**

(30) Priority: 30.12.2022 PL 44337622
(71) Applicant: Uniwersytet Morski w Gdyni, 81-225 Gdynia (PL)
(72) Inventor: Dvirna, Olha, 84-240 Reda (PL)

(57) **Abstract**

The object of the invention is a multi-edge tool clamping kit for post-weld surface finishing, the use of a multi-edge tool clamping kit for post-weld surface finishing and a method of manufacturing a multi-edge tool clamping kit for post-weld surface finishing.

The multi-edge tool clamping kit for post-weld surfaces finishing consists of three main structural elements: a left hand unequal-edged steel angle (2), a right hand unequal-edged steel angle (6) and a guide (7) for a stainless steel cutting tool (5) fixed on a stationary table top of a hydraulic machine.

The method of manufacturing a kit for clamping a multi-edge tool for post-weld surfaces finishing involves several unit processes such as welding, cutting, milling, drilling, threading for the preparation of the structural elements of the kit consisting of the manufacture of a left-hand unequal-edged steel angle bar (2), a right-hand unequal-edged steel angle bar (6) and a guide (7) for a stainless steel cutting tool (5) with a slot for precise guidance of the tool.

The use of a multi-edge tool clamping kit for post-weld surface finishing, confirms the effectiveness of the mounting of the tool clamping kit for removing the weld face allowance from specimens welded according to different welding methods (MMA, MIG/MAG, TIG) of the material (5), with different steel grades treated, i.e. unalloyed structural steel 1050 (S235JR), stainless steel 1.3964 and aluminium alloy 7020 (PA47).

## Description

The object of the Invention is a multi-edge tool clamping kit for post-weld surface finishing, the use of the multi-edge tool clamping kit for post-weld surface finishing and a method of manufacturing the multi-edge tool clamping kit for post-weld surface finishing.

From the state of the art, we are familiar with tools for post-weld surfaces finishing and clamping systems used for machining cutting tools or abrasive tools.

From the description of patent application EP 0753366 A1, a cutting tool for chip machining is known, consisting of a carrier tool held by a clamping foot. On the clamping toot there Is a clamping element acting in the direction of the clamping screw, which is equipped with a bumper on the lower side facing the cutting plate.

From patent description PL 207195, there Is known a cutting tool for chip machining fixed by a clamping foot. This clamping foot Is equipped with a clamping element In the lower part facing the cutting plate and with a cam. The clamping foot pushes the clamping element towards the clamping screw on the supporting tool and immobilises the clamping foot for clamping the chip cutting tool.

From the description of patent application P.433963, a system for universal tool clamping in a multifunctional grinding machine Is known. The tool clamping system is based on a movable rod cooperating with a fin positioned perpendicularly in the socket. With this positioning, the tool is immobilised using a screw coupling that provides a backlash-free connection between the tool and its drive unit.

A chuck assembly for holding a tool In a machine tool Is known from patent description PL 211285. This assembly comprises a collet for positioning the shank part of the cutting tool and a lock nut for creating a clamping force between the collet and the shank part of the cutting tool.

Patent application P.433166, on the other hand, describes a the multi-edge cutting tool for post-weld surface finishing, made In the form of a steel bar of rectangular cross-section equipped on one of its external surfaces with cutting elements In the form of teeth, where the teeth are linearly arranged and their number depends on the height of the weld bead to be machined, but there Is no fixing of such a tool.

The purpose of the present Invention is to present such a kit for clamping a multi-edge tool for post-weld surface finishing, by means of which it is possible to obtain a tool clamping condition for realising a method of machining the stitch of welded Joints of different shape, dimensions and welding method. So far, no such solution is known to allow the use of a standard machine, in particular a hydraulic one designed for surface cutting work with a multi-edge cutting tool. The solutions presented above do not solve the problem of quickly setting up and preparing the machine for work with a multi-edge tool, and they require skilled personnel to operate and often do not maintain the required tolerances. In addition, a major problem is generated by the anchoring of the tools In the machine, which requires additional tools or aids to properly mount the cutting orgrinding tool and continue its correct operation. All of this leads to a constant search for better solutions, including those that allow the adaptation of universal machines for machining with multi-edge cutting or abrasive tools.

The essence of the invention Is a kit for clamping a multi-edge tool for post-weld surfaces finishing in a standard hydraulic machine tool, which Is made of steel and fixed to a stationary machine table top consisting of three structural elements: a left unequal-arm steel angle, a right unequal-arm steel angle, a guide for a cutting tool made of stainless steel.

Advantageously, the members I and II according to the Invention are characterised In that the left unequal-arm steel angle with dimensions 70±0.05×147±0.05×10±0.05×420±0.05 mm and the right unequal-arm steel angle with dimensions 90±0.05×147±0.05×10±0.05×420±0.05 mm are made of 1050 (S235JR) steel.

Advantageously, both left and right angle brackets are fixed to the table top of the machine tool on the side of the longer arm using three constructional holes with a diameter of 12±0.05 mm and a length of 80±0.05 mm located on the line of three grooves situated respectively from the external side of the edge of the left angle bracket and the right angle bracket towards the Internal side, symmetrically distributed, with the length of the grooves for the left angle bracket being at least one-third shorter than the length of the grooves for the right angle bracket.

Advantageously, the centre distance of the successive grooves counted from the front from the line of the machine top on both sides on each long arm of the left and right angles are symmetrically located at a distance of respectively: 85±0.05 mm, 192±0.05 mm, 300±0.05 mm from the line of the table top.

Advantageously, the left-hand angle is equipped on the outside with a shelf for anchoring the workpieces made of a steel bar characterised by a square cross-section.

Advantageously, the guide is made of stainless steel with Increased hardness, mounted on the outside of the angle piece, where it Is 120±0.05 mm from the front from the line of the table top to the centre of the groove, diagonally from the front starting from the upper part with two 9±0.05 mm diameter pins and from the lower part with two screws In M8 threaded holes together with a washer.

Advantageously, the guide has a central slot either 14.28js9 or 19.05js9 wide.

The essence of the Invention also lies in the use of a kit for damping a multi-tool for finishing post weld surfaces In a hydraulic machine.

Advantageously, the workpiece sample with the weld joint should be positioned vertically on a shelf opposite the multi-tool at a distance equal to the height of the tool.

In addition, the essence of the invention also remains the method of manufacturing a toolholding assembly for finishing post-welding surfaces, where each of the three structural elements I, II, III is subjected to unitary operations selected from the group of welding, cutting, milling, drilling, threading.

Advantageously, the structural element I is designed for fixing specimens and is manufactured by welding a square steel bar of 20±5×20±5 mm to an angle bar of 150±5×150±5×10±5 mm, then cutting the angle bar to 70±5 mm, milling three structural holes of 12±0.05 mm diameter and 80±5 mm length.

Advantageously, the structural element it is produced by cutting the angle bar to a dimension of 70±5 mm, milling three structural holes of 12±0.05 mm diameter with a length of 80±5 mm, drilling four holes of 9±0.05 mm diameter to a depth of 12±5 mm.

Advantageously, the milling is carried out across the welded steel bar at an angle of 90°, whereby the milling of the angle bar surface Is carried out with parallelism and perpendicularity of the walls with an accuracy of 0.01 mm.

Advantageously, construction element III of the guide Is produced by milling a guide measuring 60±0.05×70±0 05×70±0.05 mm, milling a groove In the guide measuring 19.05J 9 and drilling two holes of 9 mm diameter diagonally for the attachment of two dowels and drilling two holes for M8 threads and tapping two M8 threads, and finally the assembly is assembled on the machine table.

Advantageously, construction element III of the guide is produced by milling a guide measuring 60±0.05×70±0.05×70±0.05 mm, milling a groove in the guide measuring 14.28j 9 and drilling two holes of 9 mm diameter diagonally for the fixing of two dowels. and drilling two holes for M8 threads and successively threading two M8 threads, finishing with the assembly of the kit on the machine table.

The main advantages of the presented solution are the speed and ease of assembly of the multi-edge rectangular steel cutting tool for post-weld surfaces finishing, allowing precise work ensured by a vertical, reciprocating, stable movement along the weld removing the weld face allowance. The added value of the proposed solution is the quick set-up and preparation of the machine to perform the operation and thus the machining of welds of different lengths and widths The multi-edge tool clamping kit for post-weld surface finishing, allows the use of rectangular tools in a range of dimensions and fit tolerances. The ease of use of a machine equipped with the multi-edge tool clamping kit does not require the use of skilled personnel. The use of the kit ensures fast and precise machining without generating environmental pollution. The correct fixing of the kit to the table of the hydraulic machine allows precise movement of the tool along the weld bead of various shapes, sizes and welding methods (MMA, MIG/MAG, TIG). The multi-edge tool clamping kit allows the tool to be guided relative to a vertical axis perpendicular to the surface of the machine table, effectively removing the excess face without the operator having to use force. The chips of the removed allowance fall freely Into the receptacle under the table on which the kit Is mounted, without clogging the tool used.

The object of the invention is illustrated In an example of the Implementation in the figure In which:
Fig. 1 shows a multi-edge tool clamping kit for post-weld surface finishing together with a cutting tool in front view,
Fig. 2 shows a multi-edge tool clamping kit for post-weld surface finishing together with a cutting tool In a right-hand side view.
Fig. 3 shows a multi-edge tool clamping kit for post-weld surface finishing together with a cutting tool in left side view,
Fig. 4 shows a multi-edge tool clamping kit for post-weld surface finishing together with a cutting tool in top view**.**

For clarity of representation, the same elements shown in the drawings are labelled with the same reference numbers.

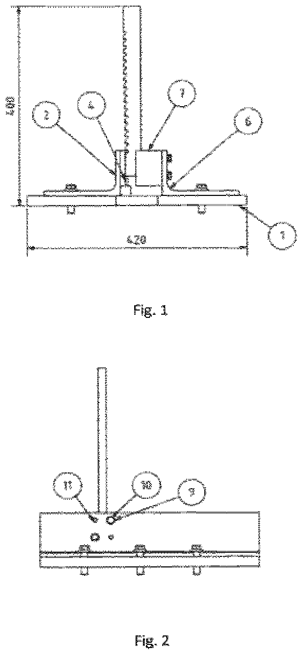

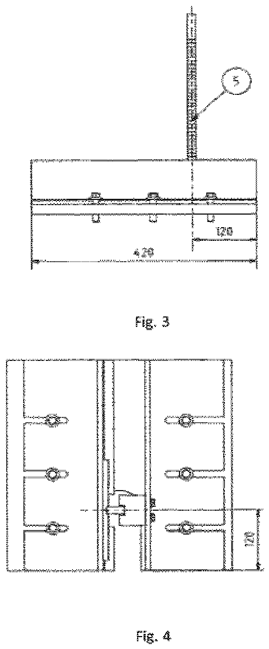

Fig. 1 shows a multi-edge tool clamping kit for post-weld surface finishing, consisting of three main components fixed to a stationary machine table - a standard hydraulic machine of various types, i.e.: a) left angle bar 2, b) right angle bar 6 and c) guide 7 for the stainless steel cutting tool 5. The left unequal-arm steel angle bar 2 with the dimensions (height x width x thickness x length**)** 70×147×10×420 mm is made of 1050 (S235JR) steel. Along the length of the left angle bar 2 on the outside there is a welded shelf 4, on which the actual material sample, fixed and worked after welding, rests. The right angle bar 6 with dimensions (height x width x thickness x length) 90±5×147±5×10±5×420±5 mm Is also made of 1050 (S235JR) steel. The guide 7 Is made of stainless steel with Increased hardness and positioned on the outside of the structural element 6 of the angle bar part, at a distance equal to 120 mm from the front of the table line to the centre of the groove. According to the view shown in Fig. 2, the guide 7 fastened diagonally from the front starting from the upper part with two pins 11 with a diameter of 9 mm and from the lower part with two screws 10 In holes with M8 threads together with a washer 9. Fig. 4 shows the set-up for fastening a multi-edge tool clamping kit for post-weld surface finishing together with a multi-edge tool 5 in top view, where on the left side, opposite the material sample to be machined, a guide slot is made for the tool with dimensions 14,28j 9. Both angles 2 and 6 are fixed to the machine table by three design holes 12±0.05 mm in diameter and 80±5 mm In length located on a line of grooves situated respectively from the outer side of the edge of angles 2 and 6 towards the Inner side, symmetrically distributed, the grooves for design element I being one-third shorter in length than the grooves for design element II and being 74±5 mm and 104±5 mm respectively. The distances of the centre of the grooves from the front to the line of the machine top on both sides are respectively: 85±5 mm, 19215 mm, 300±5 mm.

The machine's standard piston presses on a multi-edged steel tool 5 with a rectangular cross-section, moving the tool from top to bottom In the guide slot of guide 7 ensuring a vertical, reciprocating, stable movement along the weld. Thanks to the guide 7, the tool 5 is not deflected from the vertical and the blades take off the excess face. The multi-edge tool clamping kit for post-weld surface finishing ensures that the tool wears evenly and works properly throughout its lifetime.

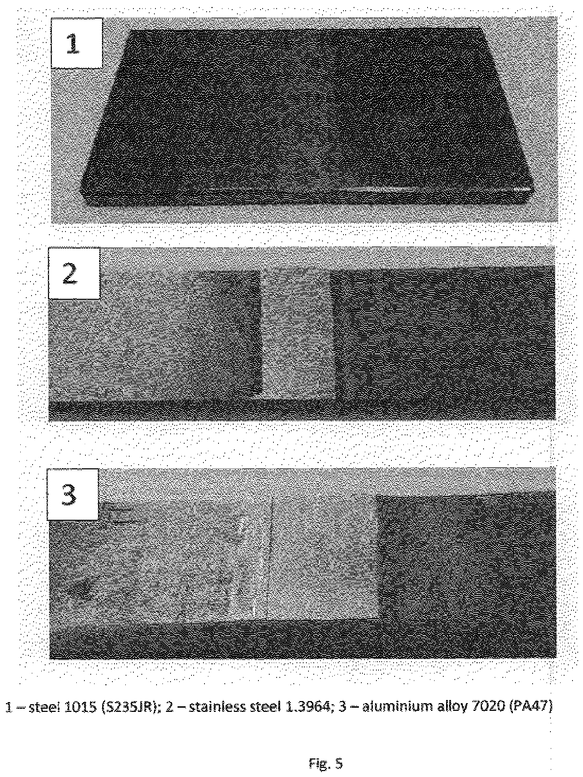

in another Implementation, Fig. 4 shows a multi-edge tool clamping kit for post-weld surface finishing together with a cutting tool In a top view, where a guide slot for a tool of dimension 19.05j 9 Is made on the left side opposite the material sample to be machined.
The use of a multi-edge tool clamping kit for post-weld surface finishing according to the examples of the Invention confirms the effectiveness of the machining In removing the face allowance. Fig. 5 shows specimens of material 5, with different grades of steel being machined, I.e. unalloyed structural steel 1050 (S235JR), stainless steel 1.3964 and aluminium alloy 7020 (PA47). In all cases of the specimens, regardless of their hardness during clamping, there Is no need for accurate vertical alignment and tool fixation, and the invention provides satisfactory results, while being easy to Implement.

In the manufacturing example according to the Invention, the method of manufacturing a multi-edge tool clamping kit for post-weld surface finishing Includes several unit processes such as welding, cutting, milling, drilling to prepare the structural elements of the set consisting of element I - a left unequal-arm steel angle bar 2, element II - a right unequal-arm steel angle bar 6 and element III - a guide 7 for a stainless steel cutting tool 5 together with a slot for guiding the tool. In Fig. 1 the structural element I for holding the specimens is produced by means of a shelf 4 obtained by welding a steel bar 4 with a square cross-section of 20±5×20±5 mm to an Isosceles angle bar of 150±5×150±5×10±5 mm, cutting one arm of the angle bar to a dimension of 70±5 mm and milling three structural holes of 12±0,05 mm in diameter and 80±5 mm long for fixing the assembly to the table top of machine tool 1, and then milling across the welded steel bar at an angle of 90°, ensuring that the surface of the angle bar Is milled while maintaining parallelism and perpendicularity of the walls to an accuracy of 0.01 mm. Structural element II Intended for fastening the guide bar with a slot for tool guidance 7 is manufactured by cutting the angle bar to 70±5 mm, milling three structural holes 1210.05 mm In diameter and 80±5 mm long for fastening the assembly on table top 1, drilling four holes 9±0.05 mm In diameter to a depth of 12±0.05 mm for fastening the guide bar, milling the surface of the angle bar while maintaining parallelism and perpendicularity of the walls with an accuracy of 0.01 mm. In Fig. 4 the structural element III of the guide Is produced by milling the guide with dimensions 60±5×70±5×70±5 mm, milling a groove in the guide 7 with dimensions 19.05j 9 providing a precise slot for guiding the multi-point cutting tool 5, then drilling two diagonal holes 9±0.05 mm in diameter for fastening the two dowels 11 and drilling two holes 10 for M8 threads and tapping the two M8 threads, and finally assembling the kit on the machine table top.

In another example of the manufacture according to the invention of a multi-edge tool clamping kit for post-weld surface finishing in Fig. 4 the structural element III of the guide Is produced by milling the guide with dimensions 60±5×70±5×70±5 mm, milling a groove in the guide 7 with dimensions 14.28j 9 providing a precise slot for guiding the multi-edge tool cutting tool 5, then drilling two holes with a diameter of 9 mm diagonally for fixing two dowels 11 and drilling two holes 10 for M8 threads and threading two M8 threads, and finally assembling the set on the table top of the machine tool.

List of designations on the drawings:
1 - top of machine table - machine tool
2 - structural element I - left angle steel angle bar
3 - hot-rolled steel profile, longer angle iron frame
4 -square steel bar, shelf for holding specimens to be machined
5 - multi edged cutting tool
6 - structural element II - right angle steel unequal beam
7 - construction element III - guide with slot width of multi-tool for its guidance
8 - M8 threaded holes
9 - washer
10 - hexagon head screw M8
11 - rolling pin

## Claims

1. A kit for clamping a multi-edge tool for post-weld surface finishing in a standard hydraulic machine tool, made of steel and fixed to a stationary machine table top, **characterised In that**, it consists of three structural elements: a left unequal-arm steel angle bar (2), a right unequal-arm steel angle bar (6), a guide (7) for a stainless steel cutting tool (S).

2. The kit according to claim 1, **characterised in that**, the left unequal-arm steel angle (2) with dimensions 70±0.05×147±0.05×10±0.05×420±0.05 mm, the right unequal-arm steel angle (6) with dimensions 90±0.05×147±0.05×10±0.05×420±0.05 mm are made of 1050 (S235JR) steel.

3. The kit according to claims from 1 to 2, **characterised in that**, the both angle brackets (2) and (6) are fixed to the table top of the machine tool (1) on the side of the; longer arm by means of three constructional holes 12±0.05 mm in diameter and 80±0.05 mm in length located on the line of three grooves situated respectively from the external side of the edge of the angle bracket (2) and (6) towards the internal side, symmetrically disposed, while the length of the grooves for the angle bracket (2) is at least one-third shorter than the length of the grooves for the angle bracket (6).:

4. The kit according to claims from 1 to 3, **characterised in that**, the distance of the: centre of successive grooves counted from the front from the line of the machine top on both sides on each longer arm of the angle bar (2) and (6) are symmetrically located at a distance of respectively: 85±0.05 mm, 192±0.05 mm, 300±0.05 mm from the table top line.

5. The kit according to claims from 1 to 4, **characterised in that**, the angle bracket (2) on the external side is equipped with a shelf for anchoring the workpieces made of a steel bar (4) of square cross-section.

6. The kit according to claims from 1 to 5, **characterised in that**, a guide (7) made of stainless steel with Increased hardness, fixed on the external side of the angle piece (6), at a distance equal to 120±0.05 mm from the front from the line of the table top (1) to the centre of the groove, diagonally from the front starting from the upper part with two pins (11) with a diameter of 9±0.05 mm and from the lower part with two screws (10) in holes with thread M8 together with a washer (9).

7. The kit according to claim 6, **characterised in that** the guide (7) has a centrally located slot with a width of 14.28] 9 or 19.05j 9.

8. Use of the kit for clamping a multi-edge tool for post-weld surface finishing on a hydraulic machine.

9. Application according to claim 1, **characterised in that**, the workpiece sample together with the welded joint is positioned vertically on a shelf (4) opposite the multi-edge tool at a distance equal to the height of the tool.

10. A method of manufacturing the kit for clamping a multi-edge tool for post-weld surface finishing, **characterised in that**, each of the three components I, II, III undergoes individual operations selected from the group of welding, cutting, milling, drilling, threading.

11. The method according to claim 10, **characterised in that**, the structural element I for fixing the specimens is manufactured by welding a steel bar (4) of square cross-section of 20±5×20±5 mm to an angle bar of 150±5×150±5×10±5 mm, cutting the angle bar to the dimension of 70±5 mm, milling three structural holes of 12±0.05 mm diameter of 80±5 mm length.

12. The method according to claim 10 and claim 11, **characterised in that,** the structural element II is produced by cutting the angle bar to the dimension of 70±5 mm, milling three structural holes of 12±0.05 mm diameter with a length of 80±5 mm, drilling four holes of 9±0.05 mm diameter to a depth of 12±5 mm.

13. The method according to claims from 10 to 12, **characterised in that**, the milling across the welded steel bar at an angle of 90°, whereby the milling of the surface of the angle bar is carried out while maintaining parallelism and perpendicularity of the waits with an accuracy of 0.01 mm.

14. The method according to claims from 10 to 13 **characterised In that,** the constructional element III of the guide is manufactured by milling the guide with dimensions 60±0.05×70±0.05×70±0.05 mm, milling a groove In the guide with dimensions 19.05j 9 and drilling two holes with a diameter of 9 mm diagonally for fixing two dowels (11) and drilling two holes (10) for thread M8 and threading two threads M8 and, finally, mounting the kit on a machine tool table.

15. The method according to claims from 10 to 13, **characterised in that**, the constructional element III of the guide Is made by milling the guide with dimensions 60±0.05×70±0.05×70±0.05 mm, milling a groove in the guide with dimensions 14.28j 9 and drilling two holes with a diameter of 9 mm diagonally for fastening two dowels (11) and drilling two holes (10) for thread M8 and threading two threads M8 and, finally, mounting the kit on a machine tool table.
